# EUROPEAN PATENT SPECIFICATION

(11) **EP 4 486 511 B1**
(45) Date of publication and mention of the grant of the patent: **11.03.2026**
(21) Application number: 23719835.3
(22) Date of filing: 28.02.2023
(51) Int. Cl.: B03C 1/28, B01D 35/06, B03C 1/033, C02F 1/48, F24D 19/00, H01F 7/02

(54) **MAGNETIC FILTER**
MAGNETFILTER
FILTRE MAGNÉTIQUE

(30) Priority: 28.02.2022 US 202217682657; 08.11.2022 GB 202216581
(43) Date of publication of application: 08.01.2025
(73) Proprietor: Adey Holdings (2008) Limited, Haresfield, Stonehouse GL10 3EZ (GB)
(72) Inventor: BUTTON, Mark, Stonehouse, Gloucestershire GL10 3EZ (GB); PATHAN, Kashem, Stonehouse, Gloucestershire GL10 3EZ (GB)
(74) Representative: Noble, Frederick
(86) International application number: PCT/GB2023/050446
(87) International publication number: WO 2023/161660

(56) References cited:
- EP-A1- 3 815 790
- GB-A- 2 459 289
- GB-A- 2 551 830
- KR-B1- 101 576 185
- US-A- 5 043 063
- US-A- 6 077 333

## Description

The present invention relates to a magnetic filter, in particular a filter suitable for use in large commercial heating and/or cooling systems.

### BACKGROUND TO THE INVENTION

Magnetic filters are used to collect ferrous particles in suspension in piped water systems, for example, in heating and/or cooling systems. Large heating / cooling systems, for example, which use 2 inch (around 50mm) or greater diameter pipe for the heating and/or cooling circuit(s) generally require a reasonably large filter. Filters sold under the trade mark "Magnaclean (RTM) Commercial", for example, fit into this category.

These filters generally take the form of a large, heavy, cast or fabricated container, with an inlet and an outlet on either side, a removable lid, and magnets extending into the container to attract and retain magnetic particles from system water as it flows through the filter. These large filters are typically connected into the heating / cooling circuit by providing a welded flange on the inlet and outlet of the filter. A similar flange can be welded onto the pipe ends to be connected, and each pipe flange is then bolted to its corresponding filter flange, some sealing material having been placed in between. A filter of this type may operate at a pressure of up to, for example, 10 bar.

The magnets are provided as magnetic rods, constructed from a number of smaller magnets held in a stack. The magnets are sleeved into the filter from the lid in steel tubes, which depend from the underside of the lid and protect the magnets from damage and degradation. Typically, there may be an array of five magnetic rods extending from the lid of the filter into the filtering chamber within.

In order to service the filter, it is usual practice to lift the magnetic rods substantially out of the sleeves, to be able to clean off the magnetite build up on the sleeves as described in GB2551830. A problem with this filter arrangement is that water can leak into the sleeve, particularly when carrying out this servicing. If water leaks into the sleeves, then heating and cooling system water can rust the magnets themselves, making them less effective or substantially ineffective over time. Furthermore, water present inside the sleeve in cooling systems is a particular problem. Water vapour can condense on the cold surface of the magnet and then run down into the sleeve. The water may accumulate inside the sleeve where it can freeze and expand, thereby pushing the magnets out of the sleeve, further making them less effective.

It is an object of the present invention to reduce or substantially obviate the aforementioned problems.

### STATEMENT OF INVENTION

According to a first aspect of the present invention there is provided a magnetic filter comprising a magnetic rod sleeve and a magnetic rod guide disposed at an opening of the magnetic rod sleeve and a magnetic rod for inserting through the magnetic rod guide and into the magnet sleeve, wherein the magnetic rod can be slidably moved from an operable position wherein the magnetic rod is substantially disposed inside the magnetic rod sleeve and a retracted position wherein a portion of the magnetic rod is disposed outside of the magnetic rod sleeve;
the magnetic rod guide comprising:
a through aperture for receiving the magnetic rod;
a seal inside the through aperture for providing a water-tight seal between the magnetic rod guide and magnetic rod; and
a retaining means for holding the magnetic rod in the retracted position; and
the magnetic rod comprising:
   at least one air conduit extending from a bottom port of the magnetic rod to a top port of the magnetic rod wherein the bottom port is disposed within the magnetic rod sleeve in the operable and retracted positions and the top port is disposed outside of the magnetic rod sleeve in the operable and retracted positions for allowing air within the sleeve to be displaced as the magnetic rod is moved from the retracted position to the operable position and wherein the seal provides a water-tight seal in both the operable and retracted positions.

The water-tight seal provided inside the through aperture mitigates water ingress into the magnet sleeve from outside the filter. This is particularly advantageous where condensation is present on the magnetic rods when they are in the retracted position. The water-tight seal prevents the condensation on the magnetic rods from passing through into the magnet sleeve.

Condensation is a particular problem when the filter is installed in a cooling system since the body of the filter will be cold when the cooling system is in operation and condensation is likely to form. At the same time, any water entering the magnet sleeves may freeze and certainly will not evaporate, making it very difficult to remove.

The presence of water in the magnet sleeve can lead to corrosion. The water can cause damage to the filter from water expansion as the water freezes. Freezing water may push the magnet out of the magnet sleeve, reducing the effectiveness of the filter.

The air conduit in the magnetic rod provides fluidic communication between an interior of the magnet sleeve and the exterior of the filter for allowing air within the magnet sleeve to be displaced as the magnetic rod is inserted into the magnet sleeve. The air conduit may prevent the formation of a vacuum in the magnet sleeve as the magnetic rod is pulled out of the magnet sleeve. The air conduit may allow the air pressure inside the magnet sleeve to equal the air pressure outside of the filter.

The top port may be provided near an upper end of the magnetic rod, preferably at a top of the handle. The top port allows air to flow between the air conduit and the exterior of the magnetic filter. The top port may be provided by a vent. The vent may allow air to pass through. The vent may prevent water or liquids from passing through. At least part of the vent may be formed from GORE-TEX (RTM) or another suitable membrane material which is permeable by air and vapour but not by liquid water. The top port may be disposed at the top of the magnetic rod, in embodiments where the magnetic rod is movable upwardly out of a lid of the filter. It will be understood that in embodiments where the rod can be retracted from the filter to the side, or downwards from underneath the filter, the "top port" will be positioned accordingly - i.e. always towards an end of the magnetic rod which is furthest from the filter when the rod is retracted from the filter.

The bottom port allows air to flow between the inside of the magnet sleeve and the air conduit. The bottom port is preferably disposed at a bottom of the magnetic rod, in embodiments where the rod is in a lid / roof of the filter and moves upwards to retract it from the filter. In other embodiments where the rod is retracted downwardly or to one side, the "bottom port" may be positioned accordingly, otherwise than strictly "at the bottom". The "bottom port" is always on the inside side of the seal in both the operable position and retracted position.

The magnetic rod may comprise at least one central port for allowing air to escape from the air conduit. The central port may be provided by a channel perpendicular to the length of the rod. The central port may be disposed between the top port and bottom port and is "central" in that sense but does not need to be equidistant between the top and bottom ports. The central port may be disposed below the seal when the magnetic rod is in the operable position. The central port may be disposed between a bottom port and the seal when the magnetic rod is in the operable position. The central port may be disposed above the seal in the retracted position. The central port provides an additional path for airflow from the interior of the magnet sleeve to the exterior of the filter.

It will be understood that "above" and "below" are used in relation to embodiments where the magnet is moved upwardly into the retracted position. Embodiments where the magnet is moved downwardly, horizontally, or at an angle are also possible. In such embodiments "above" the seal means on the outside side of the seal, and "below" the seal means on the inside side of the seal, i.e. within the sleeve.

The through aperture may be substantially circular.

The seal may be provided by a ring. The ring may be held against an inner surface of the through aperture. The seal may include rubber. The seal may include silicone.

The seal may comprise a first lip. The first lip may extend inwards from an inner surface of the ring in a direction towards the centre of the through aperture. The first lip may be provided in contact with the magnetic rod. The first lip may provide the water-tight seal between the magnetic rod guide and magnetic rod. The water-tight seal mitigates water leaking into the magnet sleeve.

The seal may comprise a second lip. The second lip may extend inwards from an inner surface of the ring in a direction roughly towards the centre of the through aperture. The second lip may be provided in contact with the magnetic rod. The second lip may be disposed between the first lip and an opening of the through aperture at the top of the magnetic rod guide - i.e. the opening facing away from the magnetic rod sleeve. The second lip may be provided above the first lip where the magnetic rod guide is disposed on the lid (at the top) of the filter. The second lip may prevent dust from entering the first lip and magnetic rod. The dust would otherwise reduce the effectiveness of the seal provided by the first lip.

The seal may be of the type known as a "fork seal", which is known to be effective for long-term sealing of a sliding rod through an aperture.

The magnetic rod may have a metal magnet section. The metal magnet section may be disposed within the magnet sleeve in the operable position. The magnetic rod may have an extension protruding out of the magnet sleeve in the operable position. A top part of the extension may form a handle for facilitating manual longitudinal movement of the magnetic rod. The extension may meet the metal magnet section below the seal.

The extension may be formed from a different material to the metal magnet section. The extension may be formed from a more insulative material compared to the metal magnet section. The extension may be formed from a material on which condensation is less likely to form compared to the metal magnet section. For example, the extension may be made from plastics.

The central port may be provided through the extension. By providing the central port through the extension, the risk of condensation dripping into the central port when the magnetic rod is in the retracted position is limited because condensation is less likely to form on the extension compared to the metal magnet section of the magnetic rod.

For example, the central port may be disposed substantially at the bottom of the extension.

The magnetic rod may include a plurality of magnets stacked one on top of the other, separated by ferrous metal spacers and held together about a central bar.

The plurality of magnets may be disposed inside or as part of the metal magnet section.

The air conduit may be provided by at least one gap between the central bar and the plurality of magnets. In other words, the central bar may be slightly thinner than the hole through the stack of magnets, so that air can flow between the bar and the magnet stack.

The central bar may be partially threaded, i.e. threaded along part or parts of its length. The central bar may be partially threaded at a bottom end for screwing a retaining boss to the central bar. The central bar may be partially threaded at a top end for receiving a locking nut.

The bottom port may be provided by channels disposed through the retaining boss. The channels in the retaining boss may allow air from the magnet sleeve to pass through the retaining boss and into the air conduit.

Flats may be provided on threaded portions of the rod for allowing air to flow into and out of the air conduit. In another embodiment, the central bar may have flats provided substantially along its length, or along as much of its length as forms the air conduit. In these embodiments the central bar may be threaded along its length, or along as much of its length as forms the air conduit. Even in some embodiments where the bar is fully threaded, parts of the magnet stack may have a bore which is not threaded, but which is slightly wider than the thickness of the bar. In such embodiments only the parts of the bar which form part of the air conduit, and which have a thread which in use corresponds with a thread on part of the magnet stack, need to have flats for allowing air to flow between the thread and the magnet stack.

At least one resilient engagement means may releasably hold the magnetic rod in the retracted position.

At least one resilient engagement means may releasably hold the magnetic rod in the operable position.

The at least one resilient engagement means may comprise at least one resilient latch disposed inside the magnetic rod guide. The or each resilient latch may be adapted to allow movement of a magnetic rod through the through aperture in either direction, for insertion into the filter into the operable position or withdrawal from the filter into the retracted position.

The magnetic rod guide may comprise a body. The body may extend away from the filter, the through aperture extending through the body.

The or each resilient latch may be formed in the body of the magnetic rod guide and have a projection extending inwardly of the body for engagement in a recess in the magnetic rod.

Preferably the projection of the or each resilient latch is "V" shaped, the tip of the "V" shape extending inwardly of the body. By having a "V" shaped latch, the latch can act in both directions, i.e. it latches and releases when a magnetic rod is moved in both directions relative to the latch.

The or each resilient latch may extend substantially parallel to a central axis of the body and a plurality of resilient latches may be spaced around the body.

The magnetic rod may comprise one or more cooperating engagement means for engaging with the resilient engagement means of the guide. The cooperating engagement means may comprise a lower circumferential groove towards a lower end of the magnetic rod. The resilient engagement means and cooperating engagement means may allow the magnetic rod to be held in the retracted position, in which the magnetic rod is substantially withdrawn from the magnetic rod sleeve. A second cooperating engagement means may be provided. The second cooperating engagement means may comprise an upper circumferential groove towards an upper end of the magnetic rod. The second cooperating engagement means may hold the magnetic rod in the operable position, in which the magnetic rod is substantially inserted into the magnetic rod sleeve.

The magnetic filter may comprise a plurality of magnetic rod assemblies.

### BRIEF DESCRIPTION OF THE DRAWINGS

For a better understanding of the present invention, and to show more clearly how it may be carried into effect, reference will now be made by way of example only to the accompanying drawings, in which:
Figure 1 is a perspective view of a magnetic filter according to the invention, the magnetic filter having five magnetic rods held in magnetic rod guides, with the magnetic rods in an operable position within the filter;
Figure 2 is a cross-section through the magnetic filter of Figure 1, with the magnetic rods in an operable position within the filter;
Figure 3 is a cross-section through a portion of the magnetic filter of Figure 1, with the magnetic rods in an operable position within the filter;
Figure 3a is a close-up of a handle of the magnetic filter of Figure 3, with the magnetic rods in an operable position within the filter;
Figure 3b is a close-up of a seal of the magnetic filter of Figure 3, with the magnetic rods in an operable position within the filter;
Figure 3c is a close-up of a lower end of a magnetic rod of Figure 3, with the magnetic rods in an operable position within the filter;
Figure 4 is a cross-section through a portion of the magnetic filter of Figure 1, with one of the magnetic rods shown in a retracted position for cleaning the filter; and
Figure 4a is a close-up of a seal of the magnetic filter of Figure 4, with the magnetic rods in a retracted position for cleaning the filter.

### DESCRIPTION OF PREFERRED EMBODIMENTS

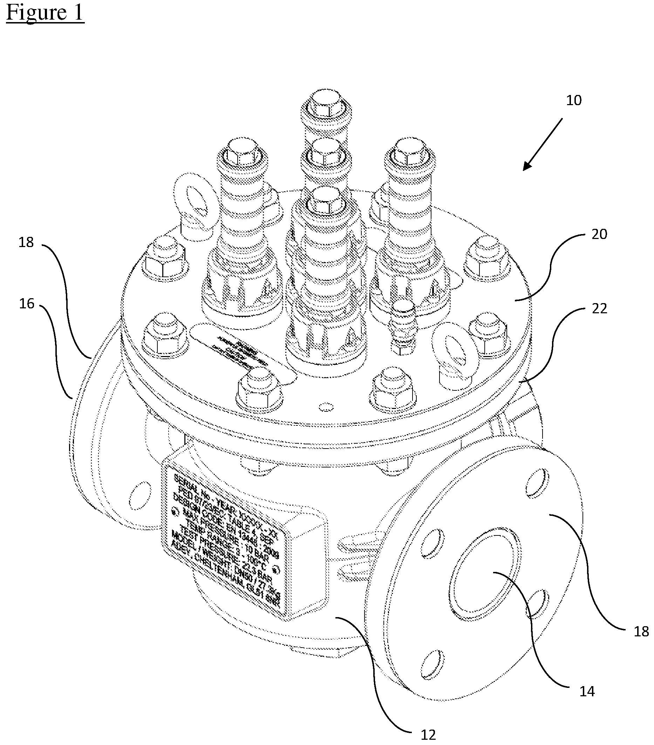

Referring firstly to Figure 1, a magnetic filter is indicated generally at 10. The filter 10 has a body 12, typically manufactured as a cast pot. The body 12 includes a chamber. An inlet 14 and an outlet 16 are provided on either side of the body 12, but flow direction is unimportant and the filter can be positioned in a flow pipe in either orientation. In use, valves, not shown, are positioned on either side of the filter so that it can be isolated from a heating circuit. The inlet and outlet 14, 16 are each formed by a circular flange 18 bounding a circular aperture in communication with the inside of the body 12. The filter is intended to be used in a hot water heating system or a cooling system and has an operating pressure of up to 10 bar.

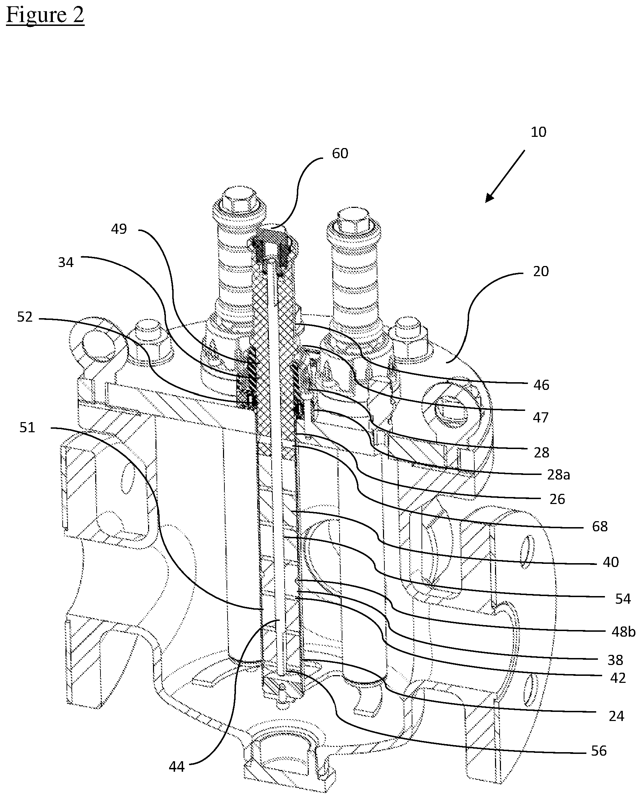

A lid 20 of the filter 10 is provided in the form of a circular plate, which is bolted to a circular flange 22 provided at the top of the filter 10. A seal (not shown) sits between the lid 20 and flange 22. Referring in particular to Figure 2, magnet sleeves 24 with closed lower ends are welded to the underside of the lid 20. An aperture 26 is provided through the lid 20 for each sleeve 24, at the points where each sleeve 24 is sealed to the lid 20.

A guide 28 for a magnetic rod is provided over each aperture 26. In total, there are five guides 28. In this embodiment, each magnetic rod guide 28 is substantially identical and integrally moulded from plastic. Other materials may be used in alternative embodiments.

Each magnetic rod guide has a body 28a. The body 28a extends upwardly from the lid 20.

Each magnetic rod guide 28 includes a through aperture 34, extending through the body 28a, for receiving a magnetic rod. The through aperture 34 is circular in cross-section. The through aperture 34 is essentially a cylindrical bore extending along an axis of the body 28a. The magnetic rod guides 28 include a seal 52 which is discussed in more detail below.

Each sleeve 24 is spaced from its neighbouring sleeves 24. Each sleeve 24 is in the form of a tube with a closed end. Each sleeve 24 is made of steel in this embodiment.

The closed end of each sleeve 24 is spaced from the bottom of the chamber in the filter 10.

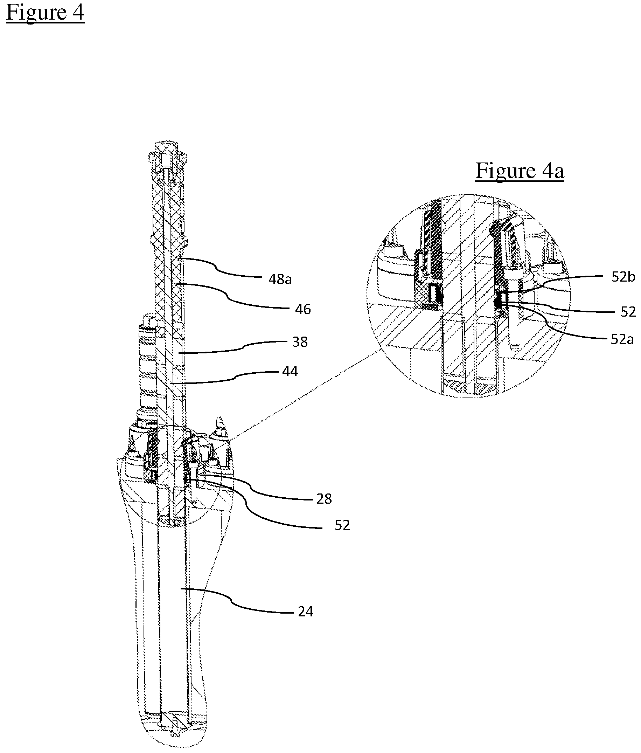

Magnetic rods 38 are insertable into the filter 10, as seen in Figures 1 to 3. The magnetic rods 38 can be retracted from the filter 10, as seen in Figure 4. Five magnetic rods 38 are provided in a cross arrangement in this embodiment. The cross is positioned on a substantially central axis of the filter 10.

In use, the filter 10 is provided as part of a heating or cooling system. During operation of the system, magnetic impurities are filtered from the water in the system and accumulate around the sleeves 24 due to the inserted magnetic rods 38. To clean the filter, the filter is first isolated by closing valves either side of the filter. The magnetic rods 38 can be retracted from the filter 10 through the respective apertures 26 in the lid 20 by pulling on a respective handle 46 disposed at a top end of the magnetic rod 38. The magnetic rod 38 then moves upwardly along a central axis of the magnetic rod guide 28. The sleeves do not then have magnets inside them. The magnetic rod guides 28 are bolted to the lid 20 and do not retract with the rods 38.

Fluid can then be drained from the filter, using a drain port at the bottom of the filter. The magnetic particles will be flushed out with the fluid.

In some cases, a valve can be opened to use pressurised heating fluid from the system to further flush through the filter.

The drain port is then closed.

The rods 38 can then be inserted back into the sleeves 24 of the filter to an operable position by pushing them in the opposite direction to that used for retracting the rods 38.

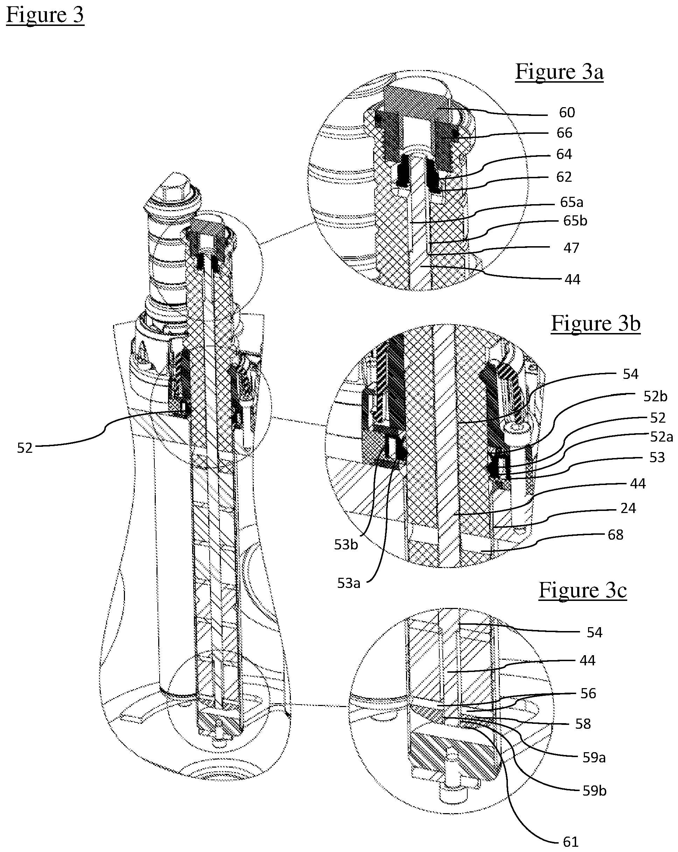

Referring now to the seal 52, best shown in Figures 3 and 3b, the seal 52 in this embodiment is provided by a ring 53. The ring 53 sits in a groove around an inside surface of the magnetic rod guide 28. The ring 53 has an inside wall 53a. The ring has an outside wall 53b. The inside wall 53a is parallel to the outside wall 53b. A top edge of the inside wall 53a is connected to the top edge of the outside wall 53b by a connecting portion, perpendicular to both the inside wall 53a and outside wall 53b. In other words, the ring 53 has a U-shaped cross section.

The U-shaped cross-section of the ring allows a bottom edge of the inside wall 53a to pivot towards the outside wall 53b as the magnetic rod 38 is inserted. The movement of the inside wall 53a allows the seal 52 to accommodate the magnetic rod 38 in the magnetic rod guide 28.

In this embodiment, the ring 53 has a first circumferential lip 52a protruding from the inside wall 53a towards the centre of the through aperture 26. This is best shown in Figure 3b in the operable position and Figure 4a in the retracted position. The first lip 52a provides a water-tight seal between the magnet sleeve 24 and the exterior of the filter 10. The water-tight seal prevents water entering the sleeve 24 from the exterior of the filter 10, e.g. condensation that has dripped down the magnetic rod 38.

As shown in Figures 3 and 4, the first lip 52a is in contact with the magnetic rod 38 in both the operable position and the retracted position.

The water-tight seal is particularly advantageous where the filter is used in cooling systems. In a cooling system, the body of the filter will be cold, possibly below freezing, when the system is in operation and cooling fluid (for example glycol or another antifreeze) is flowing around the heating circuit. Condensation may build up on the surface of the magnetic rods 38 when in the retracted position (i.e. during servicing). The seal 52 mitigates water ingress from water running down the surface of the magnetic rod 38 in the service position. When the magnetic rods 38 are inserted into the sleeves 24 to return them to the operable position, the seal 52 prevents any condensation present on the surface of the magnetic rods 38 from entering the sleeve 24.

If moisture were to enter the sleeve 24, the expansion of the water as it freezes may cause damage to the filter 10. Moisture in the sleeve 24 may facilitate corrosion and reduce the lifespan of the filter 10 before it needs replacing.

The first lip 52a has a "V-shaped" profile. The point of the "V" points inwards towards the centre of the aperture 26 from the inside wall 53a of the ring 53. The tip of the "V" extends to about a millimetre into the aperture 26 when the magnetic rod 38 is absent. This allows the "V" to come into contact with the magnetic rod 38 when it is inserted. When the magnetic rod 38 is inserted, the point of the "V" comes into contact with the magnetic rod 38. The magnetic rod 38 pushes the first lip 52a, and by extension the inside wall 53a, towards the outside wall 53b.

The first lip 52a provides a water-tight seal, preventing water from which has entered the magnetic rod guide 28 from passing the first lip 52a and into the sleeve 24. The "V" shape of the first lip 52a facilitates movement of the magnetic rod 38 along the axis of the sleeve 24 in either direction.

The seal 52 has a second lip 52b. The second lip 52b forms a flange. The second lip 52b protrudes from the inside wall 53a of the ring 53, in a direction towards the inside of the aperture 26. The second lip 52b is disposed between the first lip 52a and an opening of the aperture 26. In this embodiment, the second lip is disposed above the first lip 52a. The second lip 52b protrudes at an angle facing away from the first lip 52a, in a direction towards the opening of the aperture 26. The second lip 52b protrudes in a direction roughly parallel to a bottom edge of the "V" shape of the first lip 52a.

The second lip 52b contacts the magnetic rod 38 when in use. When the inside wall 53a is pivoted towards the outside wall 53b, the second lip 52b pivots towards the magnetic rod 38. The second lip 52b forms a dust-seal. The second lip 52b mitigates dust from collecting between the first lip 52a and the magnetic rod 38. The dust may otherwise reduce the effectiveness of the water-tight seal. In this embodiment the two lips 52a, 52b are provided by a fork seal.

Referring now to the magnetic rods 38, the magnetic rod 38 has a metal magnet section 51. The metal magnet section 51 forms a bottom portion of the magnetic rod 38. The magnetic rod 38 has an extension 49 protruding out of the sleeve 24. The rod extension 49 forms a top portion of the magnetic rod 38. In this embodiment, the rod extension 49 is made from plastic. The metal magnet section 51 and rod extension 49 are best shown in Figure 2. The rod extension 49 meets the metal magnet section 51 below the seal 52 when the magnetic rod 38 is in the operable position. In the operable position, the metal magnet section 51 is flush with the sleeve 24.

In this embodiment, the metal magnet section 51 and the rod extension 49 are substantially similar in length. In other embodiments, where the magnetic filter 10 is taller and provides longer sleeves, the metal magnet portion 51 may be substantially longer than the rod extension 49.

A top of the rod extension 49 forms the handle 46. The handle 46 is disposed above the magnetic rod guide 28. The handle 46 provides a means for pulling the magnetic rod 38 out of the sleeve 24 as described above.

The rod 38 includes a stack or column of magnets 40 separated by ferrous metal spacers or washers 42. The magnets 40 are secured to a central bar 44.

The stack of magnets 40 and washers 42 are tightly clamped together. The stack of magnets 40 and washers 42 are clamped together to ensure they are aligned and to facilitate insertion of the metal magnet section 51 into the sleeve 24.

In this embodiment, the central bar 44 is a partially threaded rod. The central bar 44 extends substantially through the handle 46. The central bar 44 is made from stainless steel. The central bar 44 passes through the stack of magnets 40 and washers 42.

An air conduit 54 is provided between the interior of the sleeve 24 and the exterior of the filter 10. The air conduit 54 provides a means for fluidic communication between the interior of the sleeve 24 and the exterior of the filter 10. The air conduit 54 allows air in the sleeve 24 to be displaced when the magnetic rod 38 is moved from the retracted position to the operable position (i.e. air is not trapped inside the sleeve 24). The air conduit 54 allows air flow into the sleeve 24 when the magnetic rod 38 is moved from the operable position to the retracted position.

The air conduit 54 allows the air pressure inside the sleeve 24 to be equal to the air pressure outside of the filter 10. This is particularly crucial where the seal 52 mitigates air flow from the magnetic sleeve 24 to the exterior of the filter.

The air conduit 54 is disposed between the central bar 44 and the sleeve 24.

In this embodiment, an internal channel provided by a gap between the central bar 44 and the stack of magnets 40 and washers 42 provides the air conduit 54.

In other embodiments, the assembled parts are machined to maintain a gap between the central bar 44 and still sit inline sufficiently to fit into the sleeve 24 without interference.

A portion of the bottom of the central bar 44 is connected to a retaining boss 58. A portion of the thread of the central bar 44 is threaded at a bottom end for screwing into a threaded aperture in the retaining boss 58. The retaining boss 58 prevents the stack of magnets 40 and washers 42 from sliding off the central bar 44. The threaded bottom portion of the central bar 44 has two flats machined onto it 59a, 59b. The flats 59a, 59b allow the retaining boss 58 to be screwed onto the central bar 44 while maintaining airflow between the sleeve 24 and the air conduit 54 through the thread portion of the central bar 44.

The air conduit 54 has bottom ports 56, best shown in Figure 3c. The bottom ports 56 are provided adjacent to a bottom of the central bar 44. The bottom ports 56 are provided by channels running through the retaining boss 58. The channels are provided by a cross-bore through the threaded aperture in the retaining boss 58. The channels extend from one side of the retaining boss 58 to an opposing side of the retaining boss 58. The channels are disposed perpendicular to the threaded aperture in the retaining boss 58.

The retaining boss 58 has a bottom face 61. The bottom face 61 of the retaining boss is roughly conical for encouraging air in the sleeve 24 to flow around the retaining boss 58 and into the bottom ports 56.

The bottom ports 56 allow air to move between the interior of the sleeve 24 and the air conduit 54 through the threaded central bar 44.

The air conduit 54 has a top port 60, best shown in Figure 3a. The top port 60 is provided by a vent. The vent is disposed in the top of the handle 46.

The rod extension 49 has a cylindrical aperture 47 which extends from the bottom of the rod extension 49 towards the handle 46. The cylindrical aperture 47 extends substantially through the handle 46.

The central bar 44 substantially penetrates the rod extension 49 through a cylindrical aperture 47. The central bar 44 substantially penetrates the handle 46 through the cylindrical aperture 47.

The central bar 44 is held in the handle assembly by a washer 62 and a locking nut 64. The locking nut 64 is a stainless-steel nut with a nylon insert. A top portion of the central bar 44 is threaded. The threaded top portion of the central bar 44 has two flats 65a, 65b. The flats 65a, 65b allow the locking nut 64 to be screwed onto the central bar 44 while maintaining airflow between the air conduit 54 and the handle assembly through the top threaded portion of the central bar 44.

In this embodiment, a screwed boss 66 is disposed in the handle assembly. The screwed boss 66 is disposed above the central bar 44. The screwed boss 66 has an external threaded surface. The external threaded surface is screwed into a threaded receiving portion in the top of the handle assembly. The screwed boss has a threaded internal surface for receiving the vent. The screwed boss 66 can be removed to provide access for a correctly sized socket for the locking nut 64 during assembly.

The vent is screwed into the handle assembly. The vent is made from expanded PTFE, for example GORE-TEX (RTM) or another suitable membrane or material which is air but not liquid permeable. The GORE-TEX allows air to flow through the vent, between the handle assembly and the exterior of the filter 10. The GORE-TEX vent prevents water ingress into the handle assembly.

The air conduit 54 has a central port 68, best shown in Figure 3b. The central port is disposed between the top and bottom ports 60, 56, and is "central" in that sense but does not need to be equidistant between the top and bottom ports 60, 56. The central port 68 is disposed below the seal 52 when the magnetic rod 38 is in the operable position.

The central port 68 is provided by a cross-bore through the aperture 47 in the rod extension 49. The central port 68 extends from one side of the rod extension 49 to an opposing side of the rod extension 49. The central port 68 is perpendicular to the axis of the aperture 47 in the rod extension 49. The central port 68 is parallel with the filter chamber lid 20. The central port 68 is disposed adjacent to the bottom of the rod extension 49.

By providing the central port 68 through the rod extension 49, the risk of condensation dripping into the central port 68 when the magnetic rod 38 is in the retracted position is limited because condensation is less likely to form on the extension 49 compared to the metal magnet portion of the magnetic rod 51.

In the operable position, the central port 68 is disposed just below the seal 52 of the magnetic filter 10. By positioning the central port 68 just below the seal 52, air may begin to enter the central port 68 as the magnetic rod 38 is lifted from the retracted position to the operable position shortly after the magnetic rod 38 is lifted.

The central port 68 provides an additional means of connection between the air conduit 54 and the exterior of the filter 10. The central port 68 increases the rate of airflow which can flow into and out of the air conduit 54, when the magnetic rod 38 is removed from the filter far enough to expose the central port 68 to the atmosphere. The central port 68 allows air to be easily transferred from the sleeve 24 to the exterior of the filter 10 and vice versa. The central port 68 facilitates insertion and retraction of the magnetic rod 38 into and out of the sleeve 24. Only for a relatively short distance of motion, when the magnetic rod 38 is nearly fully inserted into the filter, does air exchange with the atmosphere have to take place exclusively through the GORE-TEX vent 60. Relatively speaking, airflow through the vent 60 may be constricted compared to airflow through the central port 68. Hence, for a majority of the distance of travel of the magnetic rod 38, airflow through the central port 68 is relatively unrestricted.

The air conduit 54 allows air to flow freely between the sleeve 24 and the atmosphere, through the magnetic rod components. The air conduit 54 mitigates resistance from a vacuum in the magnetic sleeve 24 as the magnetic rod 38 is retracted from the sleeve 24. The air conduit 54 mitigates resistance from air in the sleeve 24 as the magnetic rod 38 is reinserted into the sleeve 24. The construction of the conduit mitigates the risk of water ingress into the sleeve 24.

Resilient latches 36 are disposed around the periphery of the through aperture 34 for releasably engaging the magnetic rod. A V-shaped projection or detent 36a is provided near the end of each latch 36, facing inwardly to engage corresponding portions of the magnetic rod.

Each latch 36 is connected to the body 28a at its lower end, allowing outward flexing when a magnetic rod moves through the through aperture 34 in either direction. The sides of the latch 36 are spaced from the body 28a, so each latch 36 is free to pivot about its lower end when a magnetic rod is inserted or retracted through the guide 28. The top of each latch 36 is substantially at the same height as the top of the body 28a, but may be lower than the height of the body 28a.

Each V-shaped detent 36a has a chamfered end to lower friction against the magnetic rod. Similarly, each V-shaped detent 36a is inwardly curved. Together, the curves of the detents 36a of the latches 36 collectively define arc portions of an incomplete circle, which complement the shape of the magnetic rod. The latches 36 are sufficiently resistant to flexing that they can support the weight of a magnetic rod without the rod slipping past the latches 36.

Annular or circumferential grooves are provided around each rod 38. These grooves allow for each magnetic rod 38 to be fixed in different positions relative to its magnetic rod guide 28. One groove 48a is provided on the handle 46, shown in Figure 4. A second groove 48b is provided near the opposite end of the rod 38, in the lower quarter of the rod, shown in Figure 2. In this embodiment, the groove 48b is inset from the end, and indents the third magnet 40 from the end. Both grooves 48a, 48b are substantially V-shaped. The grooves 48a, 48b therefore have complementary shapes to the detents 36a of the latches 36 of the magnetic rod guide 28. The upper groove 48a sits against the detents 36a when the magnetic rod 38 is provided inside the filter 10, in an operable position. The lower groove 48b sits against the detents 36a when the magnetic rod has been retracted from the filter 10.

The handle 46 also includes a plurality of grooves, best shown in Figure 4. This provides a surface facing towards the lid 20 which aids gripping of the handle 46 when retracting the magnetic rod 38 from the filter 10.

The embodiments described above are provided by way of example only, and various changes and modifications will be apparent to persons skilled in the art without departing from the scope of the present invention as defined by the appended claims.

## Claims

1. A magnetic filter (10) comprising a magnetic rod sleeve (24) and a magnetic rod guide (28) disposed at an opening of the magnetic rod sleeve (24) and a magnetic rod (38) for inserting through the magnetic rod guide (28) and into the magnetic rod sleeve (24), wherein the magnetic rod (38) can be slidably moved from an operable position wherein the magnetic rod (38) is substantially disposed inside the magnetic rod sleeve (24) and a retracted position wherein a portion of the magnetic rod (38) is disposed outside of the magnetic rod sleeve (24);
the magnetic rod guide (28) comprising:
a through aperture (26) for receiving the magnetic rod (38); and
a retaining means for holding the magnetic rod (38) in the retracted position;
***characterised in that*** the magnetic rod guide (28) further comprises a seal (52) inside the through aperture (26) for providing a water-tight seal between the magnetic rod guide (28) and magnetic rod (38); and
the magnetic rod (38) comprises at least one air conduit (54) extending from a bottom port in the magnetic rod (38) to a top port (60) in the magnetic rod (38) wherein the bottom port is disposed within the magnetic rod sleeve (24) in the operable and retracted position and the top port (60) is disposed outside of the magnetic rod sleeve (24) in the operable and retracted position for allowing air within the magnetic rod sleeve (24) to be displaced as the magnetic rod (38) is moved from the retracted position to the operable position and wherein the seal (52) provides a water-tight seal in both the operable and retracted position.

2. A magnetic filter (10) as claimed in claim 1, in which the top port (60) comprises a material breathable but waterproof for allowing air to flow through the top port (60).

3. A magnetic filter (10) as claimed in claim 1 or 2, in which at least a portion of a lower end of the magnetic rod (38) includes the bottom port (56).

4. A magnetic filter (10) as claimed in any preceding claim, in which at least a portion of an upper end of the magnetic rod (38) includes the top port (60).

5. A magnetic filter (10) as claimed in any preceding claim, in which the magnetic rod (38) includes a central port (68) disposed below the seal when the magnetic rod (38) is in the operable position.

6. A magnetic filter (10) as claimed in any preceding claim, in which the seal (52) has a first lip (52a) which may provide a water-tight seal, and a second lip (52b) which may provide a dust exclusion seal.

7. A magnetic filter (10) as claimed in any preceding claim, in which the magnetic rod guide (28) has a body extending away from the magnetic filter (10).

8. A magnetic filter (10) as claimed in any preceding claim, in which the magnetic rod (38) includes a plurality of magnets (40) stacked one on top of the other, separated by ferrous metal spacers (42) and held together about a central bar (44).

9. A magnetic filter (10) as claimed in claim 8, in which the air conduit is provided by at least one gap between the central bar (44) and plurality of magnets (40).

10. A magnetic filter (10) as claimed in any preceding claim, in which at least one resilient engagement means is provided for releasably holding the magnetic rod (38) in the retracted position.

11. A magnetic filter (10) as claimed in claim 10, in which the at least one resilient engagement means comprises at least one resilient latch (36) disposed inside the magnetic rod guide (28), the or each resilient latch (36) further being adapted to allow movement of a magnetic rod (38) through the through aperture (26) in either direction, for insertion into the magnetic filter (10) or withdrawal from the magnetic filter (10) into the retracted position.

12. A magnetic filter (10) as claimed in claim 11, when dependent on claim 9, in which the or each resilient latch (36) is a formed in the body and has a projection extending inwardly of the body for engagement in a recess in the magnetic rod (38).

13. A magnetic filter (10) as claimed in any of claims 10 to 12, in which the magnetic rod (38) comprises one or more cooperating engagement means for engaging with the resilient engagement means of the magnetic rod guide (28).

14. A magnetic rod filter as claimed in claim 13, in which the cooperating engagement means comprises a lower circumferential groove (48b) towards a lower end of the magnetic rod (38).

15. A magnetic filter (10) as claimed in any preceding claim, in which a plurality of magnetic rod (38) assemblies is fitted to the magnetic filter (10).

## Patentansprüche

1. Magnetfilter (10), der eine Magnetstabhülse (24) und eine Magnetstabführung (28), die an einer Öffnung der Magnetstabhülse (24) angeordnet ist, und einen Magnetstab (38) umfasst, der durch die Magnetstabführung (28) in die Magnetstabhülse (24) eingesetzt werden kann, wobei der Magnetstab (38) gleitend zwischen einer betriebsbereiten Position, in der der Magnetstab (38) im Wesentlichen innerhalb der Magnetstabhülse (24) angeordnet ist, und einer zurückgezogenen Position, in der ein Teil des Magnetstabs (38) außerhalb der Magnetstabhülse (24) angeordnet ist, bewegt werden kann;
wobei die Magnetstabführung (28) Folgendes umfasst:
eine Durchgangsöffnung (26) zum Aufnehmen des Magnetstabs (38); und
ein Haltemittel zum Festhalten des Magnetstabs (38) in der zurückgezogenen Position;
***dadurch gekennzeichnet, dass*** die Magnetstabführung (28) ferner eine Dichtung (52) innerhalb der Durchgangsöffnung (26) zum Bereitstellen einer wasserdichten Abdichtung zwischen der Magnetstabführung (28) und dem Magnetstab (38) umfasst; und
der Magnetstab (38) mindestens einen Luftkanal (54) umfasst, der sich von einer unteren Öffnung in dem Magnetstab (38) zu einer oberen Öffnung (60) in dem Magnetstab (38) erstreckt, wobei die untere Öffnung in der Magnetstabhülse (24) in der betriebsbereiten und
zurückgezogenen Position angeordnet ist und die obere Öffnung (60) außerhalb der Magnetstabhülse (24) in der betriebsbereiten und zurückgezogenen Position angeordnet ist, um die Luft innerhalb der Magnetstabhülse (24) zu verdrängen, während der Magnetstab (38) von der zurückgezogenen Position in die betriebsbereite Position bewegt wird, und wobei die Dichtung (52) sowohl in der betriebsbereiten als auch in der zurückgezogenen Position eine wasserdichte Abdichtung bereitstellt.

2. Magnetfilter (10) nach Anspruch 1, wobei die obere Öffnung (60) ein atmungsaktives, aber wasserdichtes Material umfasst, das den Luftstrom durch die oberen Öffnung (60) ermöglicht.

3. Magnetfilter (10) nach Anspruch 1 oder 2, wobei mindestens ein Teil des unteren Endes des Magnetstabs (38) die untere Öffnung (56) enthält.

4. Magnetfilter (10) nach einem der vorhergehenden Ansprüche, wobei mindestens ein Teil des oberen Endes des Magnetstabs (38) die obere Öffnung (60) enthält.

5. Magnetfilter (10) nach einem der vorhergehenden Ansprüche, wobei der Magnetstab (38) eine mittlere Öffnung (68) enthält, die sich unterhalb der Dichtung befindet, wenn der Magnetstab (38) in der betriebsbereiten Position ist.

6. Magnetfilter (10) nach einem der vorhergehenden Ansprüche, wobei die Dichtung (52) eine erste Lippe (52a), die eine wasserdichte Abdichtung bereitstellen kann, und eine zweite Lippe (52b), die eine Staubdichtung bereitstellen kann, aufweist.

7. Magnetfilter (10) nach einem der vorhergehenden Ansprüche, wobei die Magnetstabführung (28) einen Körper aufweist, der sich vom Magnetfilter (10) weg erstreckt.

8. Magnetfilter (10) nach einem der vorhergehenden Ansprüche, wobei der Magnetstab (38) eine Vielzahl von übereinander gestapelten Magneten (40) enthält, die durch Eisenmetall-Abstandshalter (42) voneinander getrennt und um einen zentrale Stange (44) herum zusammengehalten werden.

9. Magnetfilter (10) nach Anspruch 8, wobei der Luftkanal durch mindestens einen Spalt zwischen der zentralen Stange (44) und der Vielzahl von Magneten (40) bereitgestellt ist.

10. Magnetfilter (10) nach einem der vorhergehenden Ansprüche, wobei mindestens ein elastisches Einrastmittel zum loslösbaren Halten des Magnetstabs (38) in der zurückgezogenen Position bereitgestellt ist.

11. Magnetfilter (10) nach Anspruch 10, wobei das mindestens eine elastische Einrastmittel mindestens eine elastische Verriegelung (36) umfasst, die in der Magnetstabführung (28) angeordnet ist, wobei die oder jede elastische Verriegelung (36) ferner dazu ausgelegt ist, die Bewegung eines Magnetstabs (38) durch die Durchgangsöffnung (26) in eine beliebige Richtung zum Einführen in den Magnetfilter (10) oder zum Zurückziehen aus dem Magnetfilter (10) in die zurückgezogene Position zu ermöglichen.

12. Magnetfilter (10) nach Anspruch 11, wenn abhängig von Anspruch 9, wobei die oder jede elastische Verriegelung (36) in dem Körper ausgebildet ist und einen Vorsprung aufweist, der sich von dem Körper nach innen erstreckt, um in eine Aussparung in dem Magnetstab (38) einzugreifen.

13. Magnetfilter (10) nach einem der Ansprüche 10 bis 12, wobei der Magnetstab (38) ein oder mehrere kooperierende Einrastmittel zum Einrasten mit dem elastischen Einrastmittel der Magnetstabführung (28) umfasst.

14. Magnetstabfilter nach Anspruch 13, wobei das kooperierende Eingriffselement eine untere umlaufende Nut (48b) in Richtung eines unteren Endes des Magnetstabs (38) umfasst.

15. Magnetfilter (10) nach einem der vorhergehenden Ansprüche, wobei eine Vielzahl von Baugruppen aus Magnetstäben (38) an dem Magnetfilter (10) angebracht ist.

## Revendications

1. Filtre magnétique (10) comprenant un manchon de tige magnétique (24) et un guide de tige magnétique (28) disposé au niveau d'une ouverture du manchon de tige magnétique (24), ainsi qu'une tige magnétique (38) à insérer à travers le guide de tige magnétique (28) et dans le manchon de tige magnétique (24), dans lequel la tige magnétique (38) peut être déplacée de manière coulissante entre une position opérationnelle où elle est essentiellement disposée à l'intérieur du manchon de tige magnétique (24) et une position rétractée où une partie de la tige magnétique (38) est disposée à l'extérieur du manchon de tige magnétique (24) ;
le guide de tige magnétique (28) comprenant :
une ouverture traversante (26) pour recevoir la tige magnétique (38) ; et
un moyen de retenue pour maintenir la tige magnétique (38) en position rétractée ;
***caractérisé en* ce que** le guide de tige magnétique (28) comprend en outre un joint (52) à l'intérieur de l'ouverture traversante (26) pour assurer un joint étanche à l'eau entre le guide de tige magnétique (28) et la tige magnétique (38) ; et
la tige magnétique (38) comprend au moins un conduit d'air (54) s'étendant d'un orifice inférieur dans la tige magnétique (38) à un orifice supérieur (60) dans la tige magnétique (38), dans lequel l'orifice inférieur est disposé à l'intérieur du manchon de tige magnétique (24) en position rétractée et opérationnelle, et l'orifice supérieur (60) est disposé à l'extérieur du manchon de tige magnétique (24) en position rétractée et opérationnelle pour permettre à l'air à l'intérieur du manchon de tige magnétique (24) d'être déplacé lorsque la tige magnétique (38) est déplacée de la position rétractée à la position opérationnelle, et dans lequel le joint (52) assure un joint étanche à l'eau en position rétractée et opérationnelle.

2. Filtre magnétique (10) selon la revendication 1, dans lequel l'orifice supérieur (60) est constitué d'un matériau respirant mais imperméable, permettant à l'air de circuler à travers l'orifice supérieur (60).

3. Filtre magnétique (10) selon la revendication 1 ou 2, dans lequel au moins une partie d'une extrémité inférieure de la tige magnétique (38) inclut l'orifice inférieur (56).

4. Filtre magnétique (10) selon une quelconque revendication précédente, dans lequel au moins une partie d'une extrémité supérieure de la tige magnétique (38) inclut l'orifice supérieur (60).

5. Filtre magnétique (10) selon une quelconque revendication précédente, dans lequel la tige magnétique (38) inclut un orifice central (68) disposé sous le joint lorsque la tige magnétique (38) est en position opérationnelle.

6. Filtre magnétique (10) selon une quelconque revendication précédente, dans lequel le joint (52) présente une première lèvre (52a) qui peut assurer un joint étanche à l'eau, et une seconde lèvre (52b) qui peut assurer un joint anti-poussière.

7. Filtre magnétique (10) selon l'une quelconque des revendications précédentes, dans lequel le guide de tige magnétique (28) présente un corps s'étendant à partir du filtre magnétique (10).

8. Filtre magnétique (10) selon l'une quelconque des revendications précédentes, dans lequel la tige magnétique (38) inclut une pluralité d'aimants (40) empilés les uns sur les autres, séparés par des entretoises en métal ferreux (42) et maintenus ensemble autour d'une barre centrale (44).

9. Filtre magnétique (10) selon la revendication 8, dans lequel le conduit d'air est formé par au moins un espace entre la barre centrale (44) et la pluralité d'aimants (40).

10. Filtre magnétique (10) selon une quelconque revendication précédente, dans lequel au moins un moyen de mise en prise élastique est prévu pour maintenir de manière amovible la tige magnétique (38) en position rétractée.

11. Filtre magnétique (10) selon la revendication 10, dans lequel l'au moins un moyen de mise en prise élastique comprend au moins un loquet élastique (36) disposé à l'intérieur du guide de tige magnétique (28), le ou chaque loquet élastique (36) étant en outre adapté pour permettre le déplacement d'une tige magnétique (38) à travers l'ouverture traversante (26) dans l'une ou l'autre direction, pour l'insérer dans le filtre magnétique (10) ou la retirer du filtre magnétique (10) en position rétractée.

12. Filtre magnétique (10) selon la revendication 11, lorsqu'elle dépend de la revendication 9, dans lequel le ou chaque loquet élastique (36) est formé dans le corps et présente une saillie s'étendant vers l'intérieur du corps pour se mettre en prise dans un évidement dans la tige magnétique (38).

13. Filtre magnétique (10) selon l'une quelconque des revendications 10 à 12, dans lequel la tige magnétique (38) comprend un ou plusieurs moyens de mise en prise en coopération pour se mettre en prise avec le ou les moyens de mise en prise élastiques du guide de tige magnétique (28).

14. Filtre à tige magnétique selon la revendication 13, dans lequel le ou les moyens de mise en prise en coopération comprennent une rainure circonférentielle inférieure (48b) vers une extrémité inférieure de la tige magnétique (38).

15. Filtre magnétique (10) selon l'une quelconque des revendications précédentes, dans lequel une pluralité d'ensembles de tiges magnétiques (38) sont montés sur le filtre magnétique (10).
